# EUROPEAN PATENT APPLICATION

(11) **EP 3 923 526 A1**
(43) Date of publication of application: **15.12.2021**
(21) Application number: 20770093.1
(22) Date of filing: 11.03.2020
(51) Int. Cl.: H04L 12/721

(54) **MESSAGE FORWARDING METHOD IN NETWORK, NETWORK NODE AND NETWORK SYSTEM**

(30) Priority: 11.03.2019 CN 201910179237
(71) Applicant: Huawei Technologies Co., Ltd., Shenzhen, Guangdong 518129 (CN)
(72) Inventor: CHEN, Chuang, Shenzhen, Guangdong 518129 (CN); HU, Zhibo, Shenzhen, Guangdong 518129 (CN); XU, Jianbin, Shenzhen, Guangdong 518129 (CN); YAO, Junda, Shenzhen, Guangdong 518129 (CN)
(74) Representative: Maiwald Patent- und Rechtsanwaltsgesellschaft mbH
(86) International application number: PCT/CN2020/078810
(87) International publication number: WO 2020/182156

(57) **Abstract**

This application provides a method for forwarding a packet in a network. The network includes a first network node, a second network node, and a third network node. The first network node is connected to both the second network node and the third network node, and both the second network node and the third network node are connected to a same private network. The method is applied to the first network node, and the method includes: generating a correspondence between a first segment identifier SID and a second SID, where the first SID is an identifier that corresponds to the private network and that is stored in the second network node, and the second SID is an SID of the third network node; receiving a first packet whose destination address DA is the first SID; and when it is determined that the second network node is unreachable, pushing the second SID to the first packet to generate a packet, and sending the packet to the third network node. According to the foregoing technical solution, when the second network node is unreachable, the first network node forwards, to the third network node, the packet sent to the second network node. This increases a packet transmission rate.

## Description

This application claims priority to Chinese Patent Application No. 201910179237.3, filed with the China National Intellectual Property Administration on March 11, 2019 and entitled "METHOD FOR FORWARDING PACKET IN NETWORK, NETWORK NODE, AND NETWORK SYSTEM", which is incorporated herein by reference in its entirety.

### TECHNICAL FIELD

This application relates to the communications field, and more specifically, to a method for forwarding a packet in a network, a network node, and a network system.

### BACKGROUND

With the development of the internet, internet protocol version 6 (Internet Protocol version 6, IPv6) is a next generation IP protocol designed by the Internet Engineering Task Force to replace internet protocol version 4 (Internet Protocol version 4, IPv4). Internet protocol version 6 segment routing (Internet Protocol version 6 Segment Routing over IPv6, SRv6) is a method designed based on a source routing concept to forward an IPv6 packet on a network. Packet forwarding in the SRv6 generally includes the following three types of devices: a provider edge (provider edge, PE) device, a provider (provider, P) device, and a customer edge (customer edge, CE) device. The PE device and the P device are devices in a carrier network that provides a VPN service. The CE device is a device in a customer network that uses the VPN service. The customer network may further include another device, for example, a terminal device.

To avoid a case in which data cannot be sent to the CE device due to a fault of the PE device, two PEs may be set to be connected to a same CE devices, and the two PE devices are classified into a primary PE device and a backup PE device. When the primary PE device is faulty and cannot forward data, traffic can be switched to the backup PE device. In a currently used solution, an anycast group (anycast group) is manually configured for each PE device. This configuration is relatively complex, and some data needs to be sent to the primary PE device and then forwarded by the primary PE device to the backup PE device. As a result, data is detoured, and a data transmission rate is relatively low.

### SUMMARY

This application provides a method for forwarding a packet in a network, a network node, and a network system, to increase a packet transmission rate.

According to a first aspect, a method for forwarding a packet in a network is provided. The network includes a first network node, a second network node, and a third network node. The first network node is connected to both the second network node and the third network node, and both the second network node and the third network node are connected to a same private network. The method is applied to the first network node, and the method includes: generating a correspondence between a first segment identifier SID and a second SID, where the first SID is an identifier that corresponds to the private network and that is stored in the second network node, and the second SID is an SID of the third network node; receiving a first packet, where a destination address DA of the first packet is the first SID; and when it is determined that the second network node is unreachable, pushing the second SID to the first packet to generate a second packet, and sending the second packet to the third network node.

When the second network node is unreachable, the first network node forwards, to the third network node, a packet that should be sent to the second network node, so that the third network node forwards the packet to a destination device. This can avoid a problem that some packets are detoured, and increase a packet transmission rate.

With reference to the first aspect, in a possible implementation, the generating a correspondence between a first SID and a second SID includes: generating a correspondence between a locator field of the first SID and the second SID.

The first network node may obtain a private network route identifier of the second network node and the SID of the third network node, so as to bind a relationship between the second network node and the third network node. When the second network node is unreachable, the packet that should be sent to the second network node can be successfully sent to the destination device.

With reference to the first aspect, in a possible implementation, the method includes: receiving an advertisement packet sent by the second network node, where the advertisement packet includes the correspondence between the first SID and the second SID; or receiving the correspondence that is between the first SID and the second SID and that is configured by a network management device; or receiving the correspondence that is between the first SID and the second SID and that is sent by the third network node.

The first network node obtains the correspondence between the first SID and the second SID from the second network node, the network management device, or the third network node, so that the first network node determines a next node to which the first packet is transmitted.

With reference to the first aspect, in a possible implementation, the pushing the second SID to the first packet to generate a second packet includes: pushing an SRH to the first packet, where the SRH includes the second SID.

The first network node pushes a segment routing header (SRH) including the second SID to the first packet, so that the third network node successfully receives the second packet.

According to a second aspect, a method for forwarding a packet in a network is provided. The network includes a first network node, a second network node, and a third network node. The first network node is connected to both the second network node and the third network node, and both the second network node and the third network node are connected to a same private network. The third network node stores a routing table destined to the private network. The method is applied to the third network node, and the method includes: generating a correspondence between a first SID and a private network routing table, where the first SID is an identifier that corresponds to the private network and that is stored in the second network node, and the routing table is a private network routing table destined to the private network; receiving a packet sent by the first network node, where an SRH of the packet includes the first SID and the second SID; determining the private network routing table based on the first SID and the second SID; and forwarding the packet by using the private network routing table.

The third network node generates the correspondence between the first SID and the private network routing table destined to the private network, and determines, based on the first SID and the second SID, the private network routing table used to forward the packet, so that the packet can be successfully transmitted to a destination device.

With reference to the second aspect, in a possible implementation, the determining the routing table based on the first SID and the second SID includes: determining, based on a function field of the second SID, that the first SID needs to be used to determine a routing table used to forward the packet; and determining, based on the first SID and the correspondence, that the routing table used to forward the packet is the private network routing table.

The third network node may learn of, based on the function field of the second SID, the routing table used by the third network node to forward the packet, and then the third network node determines, based on the first SID and the correspondence between the first SID and the private network routing table, that the routing table used to forward the packet is the private network routing table, so that the third network node may learn of a DA used to forward the packet.

With reference to the second aspect, in a possible implementation, the forwarding the packet by using the private network routing table includes: deleting the SRH of the packet, searching the private network routing table by using a DA of the packet whose SRH is deleted, and forwarding the packet whose SRH is deleted based on a matched routing entry.

The third network node deletes the SRH of the packet, and searches, based on the DA of the packet whose SRH is deleted, a private network route used to forward the packet, so that the packet can be successfully forwarded to the destination device.

With reference to the second aspect, in a possible implementation, before the generating a correspondence between a first SID and a private network routing table, the method further includes: receiving the first SID sent by the second network node.

With reference to the second aspect, in a possible implementation, before the generating a correspondence between a first SID and a private network routing table, the method further includes: receiving a route that is from the second network node to the private network and that is sent by the second network node; and adding the route from the second network node to the private network to the private network routing table.

The third network node obtains the route from the second network node to the private network, so that the third network node may subsequently learn of the private network route used to forward the packet, and the third network node forwards the packet to the destination device.

With reference to the second aspect, in a possible implementation, the method further includes: sending a correspondence between the first SID and the second SID to the first network node.

According to a third aspect, a network node is provided. The network includes a first network node, a second network node, and a third network node. The first network node is connected to both the second network node and the third network node, and both the second network node and the third network node are connected to a same private network. The network node is the first network node, and the network node includes: a processing unit, configured to generate a correspondence between a first SID and a second SID, where the first SID is an identifier that corresponds to the private network and that is stored in the second network node, and the second SID is an SID of the third network node; and a receiving unit, configured to receive a first packet, where a DA of the first packet is the first SID, where when it is determined that the second network node is unreachable, the processing unit is further configured to push the second SID to the first packet to generate a second packet, and send the second packet to the third network node.

With reference to the first aspect, in a possible implementation, the processing unit is specifically configured to generate a correspondence between a locator field of the first SID and the second SID.

With reference to the third aspect, in a possible implementation, the processing unit is further specifically configured to: receive an advertisement packet sent by the second network node, where the advertisement packet includes the correspondence between the first SID and the second SID; or receive the correspondence that is between the first SID and the second SID and that is configured by a network management device; or receive the correspondence that is between the first SID and the second SID and that is sent by the third network node.

With reference to the third aspect, in a possible implementation, the processing unit is further specifically configured to push an SRH to the first packet, where the SRH includes the second SID.

According to a fourth aspect, a network node is provided. The network includes a first network node, a second network node, and a third network node. The first network node is connected to both the second network node and the third network node, and both the second network node and the third network node are connected to a same private network. The third network node stores a routing table destined to the private network. The network node is the third network node, and the network node includes: a processing unit, configured to generate a correspondence between a first SID and a private network routing table, where the first SID is an identifier that corresponds to the private network and that is stored in the second network node, and the routing table is a private network routing table destined to the private network; a processing unit, configured to generate a packet sent by the first network node, where an SRH of the packet includes the first SID and the second SID, where the processing unit is further configured to determine the private network routing table based on the first SID and the second SID; and a sending unit, configured to forward the packet by using the private network routing table.

With reference to the fourth aspect, in a possible implementation, the processing unit is specifically configured to determine, based on a function field of the second SID, that the first SID needs to be used to determine a routing table used to forward the packet; and the processing unit is further specifically configured to determine, based on the first SID and the correspondence, that the routing table used to forward the packet is the private network routing table.

With reference to the fourth aspect, in a possible implementation, the processing unit is further specifically configured to: delete the SRH of the packet, search the private network routing table by using a DA of the packet whose SRH is deleted, and forward the packet whose SRH is deleted based on a matched routing entry.

With reference to the fourth aspect, in a possible implementation, the receiving unit is specifically configured to receive the first SID sent by the second network node.

With reference to the fourth aspect, in a possible implementation, the receiving unit is further specifically configured to receive a route that is from the second network node to the private network and that is sent by the second network node; and the processing unit is further specifically configured to add the route from the second network node to the private network to the private network routing table.

With reference to the fourth aspect, in a possible implementation, the sending unit is further specifically configured to send a correspondence between the first SID and the second SID to the first network node.

According to a fifth aspect, a network node is provided. The network node includes a transceiver, a processor, and a memory. The processor is configured to control the transceiver to receive and send a signal. The memory is configured to store a computer program. The processor is configured to invoke the computer program from the memory and run the computer program, so that the network node performs the method in any one of the first aspect or the possible implementations of the first aspect.

In a design, the network node is a communications chip, the sending unit may be an input circuit or interface of the communications chip, and the sending unit may be an output circuit or interface of the communications chip.

According to a sixth aspect, a network node is provided. The network node includes a transceiver, a processor, and a memory. The processor is configured to control the transceiver to receive and send a signal. The memory is configured to store a computer program. The processor is configured to invoke the computer program from the memory and run the computer program, so that the network node performs the method in any one of the second aspect or the possible implementations of the second aspect.

In a design, the network node is a communications chip, the sending unit may be an input circuit or interface of the communications chip, and the sending unit may be an output circuit or interface of the communications chip.

According to a seventh aspect, a network system is provided. The network system includes the network node according to any one of the third aspect, the fourth aspect, or the possible implementations of the third aspect or the fourth aspect.

According to an eighth aspect, a computer program product is provided. The computer program product includes computer program code. When the computer program code is executed by a network device, the network node is enabled to perform the method according to any one of the first aspect, the second aspect, or the possible implementations of the first aspect or the second aspect.

According to a ninth aspect, a computer-readable medium is provided. The computer-readable medium stores program code, and the program code includes the method according to any one of the first aspect, the second aspect, or the possible implementations of the first aspect or the second aspect.

### BRIEF DESCRIPTION OF DRAWINGS

FIG. 1 is a schematic diagram of a network scenario according to an embodiment of this application;
FIG. 2 is a schematic structural diagram of an SRv6 SID according to an embodiment of this application;
FIG. 3 is a schematic flowchart of a method for forwarding a packet in a network according to an embodiment of this application;
FIG. 4 is a schematic diagram of a process of forwarding a packet in a network according to an embodiment of this application;
FIG. 5 is a schematic block diagram of a network node according to an embodiment of this application;
FIG. 6 is another schematic block diagram of a network node according to an embodiment of this application;
FIG. 7 is a schematic block diagram of a network node according to an embodiment of this application;
FIG. 8 is another schematic block diagram of a network node according to an embodiment of this application; and
FIG. 9 is a schematic block diagram of a network system according to an embodiment of this application.

### DESCRIPTION OF EMBODIMENTS

The following describes technical solutions of this application with reference to accompanying drawings.

To better understand the technical solutions of the present invention, the following describes related technologies used in the technical solutions of the present invention.

CE device: A CE device is a border router on a network. The CE device has a route of a customer network on a local site and is connected to a PE router. The customer network may further include another device, for example, a terminal device.

PE device: A PE device is connected to each of CE devices of different customers, and uses a VPN routing forwarding (virtual routing forwarding, VRF) table to distinguish the different customers. The PE router learns of a virtual private network (virtual private network, VPN) customer private network route from a CE directly connected to the PE router by using a PE-CE routing protocol, then changes the private network route to a route distinguisher (route-distinguisher, RD) with an IPv4 prefix by using a border gateway protocol (Border Gateway Protocol, BGP) peer relationship, sends, to a remote PE, the route distinguisher with an IPv4 prefix through a multiprotocol extensions for border gateway protocol (Multiprotocol Extensions for BGP, MP-BGP), where the RD uniquely identifies the VRF, and also transmits the customer VPN route obtained from the remote PE to a proper directly connected CE router.

A direct routing protocol between the CE and the PE may be a static routing protocol, a routing information protocol (Routing Information Protocol, RIP), an open shortest path first (open shortest path first, OSPF) protocol, an intermediate system-to-intermediate system intra-domain routing information exchange protocol (Intermediate System-to-intermediate System intra-domain routing information exchange protocol, IS-IS), or a BGP. This is not limited in this embodiment of this application.

P device: A P device is a core router device of a service provider, and is responsible for fast packet forwarding. The P device is not connected to any customer device, does not participate in interaction of any customer route, and does not learn of any customer route.

Specifically, the foregoing device may alternatively be a node that can implement packet encapsulation, packet forwarding, and packet decapsulation, for example, a switch. The foregoing device may also be referred to as a network element, a node, or another name.

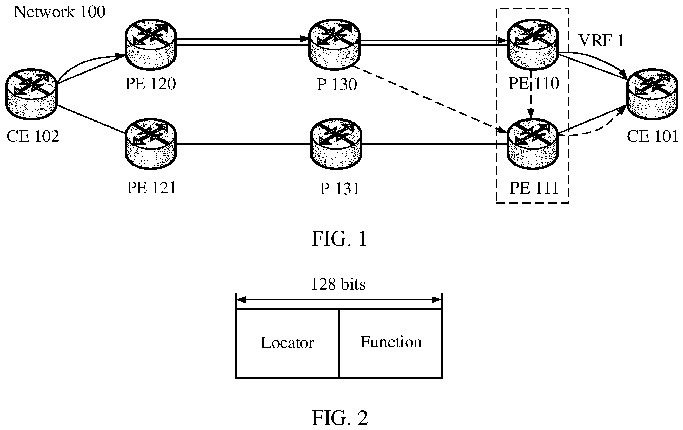

FIG. 1 is a schematic diagram of a network scenario. A network 100 shown in FIG. 1 includes a CE 101, a CE 102, a PE 110, a PE 111, a PE 120, and a P 130. It may be understood that the network 100 may be a part of a carrier network, and the carrier network may further include another P device and another PE device, for example, a P 13 1 and a PE 121.

For ease of understanding of the embodiments of this application, several concepts are first briefly described.

1. SRv6 is a method designed based on a source routing concept to forward an IPv6 packet on a network. Based on segment routing (segment routing, SR) on an IPv6 forwarding plane, a segment routing header (segment routing header, SRH) is inserted into the IPv6 packet, and an explicit IPv6 address stack is pushed into the SRH. An intermediate node is used to continuously perform operations of updating a destination address (destination address, DA) and offsetting the address stack to complete hop-by-hop forwarding.

2. A VPN is a private network established on a public network. The VPN has advantages such as good privacy, high flexibility, and strong scalability.

3. An SRv6 segment identifier (segment identifier, SID) is a 128-bit number, and may also be usually referred to as an SID. The SID is an instantiated IPv6 address, and this type of IPv6 address is assigned a unique function. One SRv6 SID can represent one node, one link, one VPN of a Layer 2 (layer 2, L2) private line, one VPN of a Layer 3 (layer 3, L3) private line, or one service. It can be said that the SRv6 SID can be used to define any network function. The SRv6 SID is a network instruction (instruction). FIG. 2 shows a structure of the SRv6 SID. The SRv6 SID includes two parts: a locator (locator) field and a function (function) field. The locator field mainly performs a routing function, and therefore is unique in an SR domain. The function field may indicate any function of a device, for example, a forwarding behavior or a service. The structure of the SRv6 SID facilitates for network programming. There are many types of SRv6 SIDs. Different types of SRv6 SIDs represent different functions. As shown in FIG. 1, an SRv6 locator field of the PE 110 maybe 200::/64, and an SRv6 locator field of the PE 111 maybe 300::/64. Because the PE 110 is connected to the customer network CE 101, a VRF 1 needs to be deployed on the PE 110, and an address of an interface connected to the CE 101 needs to be bound to the VRF, the PE 110 generates a private network routing table destined to the private network device CE 101.

In a process of forwarding an SRv6 packet, the intermediate device needs to be used to continuously perform the operations of updating the DA and offsetting the address stack to complete hop-by-hop packet forwarding. In this case, if an egress device is faulty, the packet cannot be sent to a destination device. In a currently used solution, an anycast group is manually configured for each egress PE device, so that the egress PE device externally advertises a same anycast segment identifier (anycast segment identifier). For example, as shown in FIG. 1, a forwarding path of a packet may be: CE 102→PE 120→P 130→PE 110→CE 101, where an egress PE device may be the PE 110 or the PE 111. An anycast group may be configured for the PE 110 and the PE 111, and a same VPN private network label is configured for the PE 110 and the PE 111. After the configuration is completed, the PE 110 and the PE 111 form the anycast group. For another device in the network 100, there is no difference between the PE 110 and the PE 111. After the packet is transmitted to the P 130, the P 130 needs to forward the packet to a next device. Because the PE 110 and the PE 111 are the same for the P 130, the P 130 preferentially selects a closest egress PE device. For example, a closest egress PE device in FIG. 1 may be the PE 110, and a farthest egress PE device may be the PE 111. The P 130 preferentially forwards the packet to the PE 110, and then the PE 110 forwards the packet to the CE 101. When a link between the PE 110 and the CE 101 connected to the PE 110 is faulty, the P 130 does not sense the fault, and the P 130 still sends the packet to the PE 110. After the packet reaches the PE 110, when the PE 110 finds that the link between the PE 110 and the CE 101 connected to the PE 110 is faulty, the PE 110 first forwards the packet to the PE 111, and then the PE 111 forwards the packet to the CE 101. When the P 130 senses that the link between the PE 110 and the CE 101 connected to the PE 110 is faulty, the P 130 directly forwards the packet to the PE 111, and then the PE 111 forwards the packet to the CE 101. In the foregoing solution, the anycast group formed by the PE 110 and the PE 111 needs to be manually configured, and the configuration is complex. In addition, when the link between the PE 110 and the CE 101 directly connected to the PE 110 is faulty, some packets have reached the PE 110, the PE 110 further needs to send the some packets to the PE 111, and then the PE 111 forwards the some packets to the CE 101. In this way, packet is detoured, and a data transmission rate is decreased.

Therefore, a method that can increase the packet transmission rate is urgently required.

"First", "second", and various numbers in the embodiments shown below are merely used for differentiation for ease of description, and are not used to limit the scope of the embodiments of this application, for example, used to distinguish different network nodes.

The method provided in the embodiments of this application is described in detail below with reference to the accompanying drawings.

In the embodiments shown below, optionally, a first network node is a P device. A second network node is a PE device. A third network node is a PE device. The first network node is connected to both the second network node and the third network node, and both the second network node and the third network node are connected to a same private network.

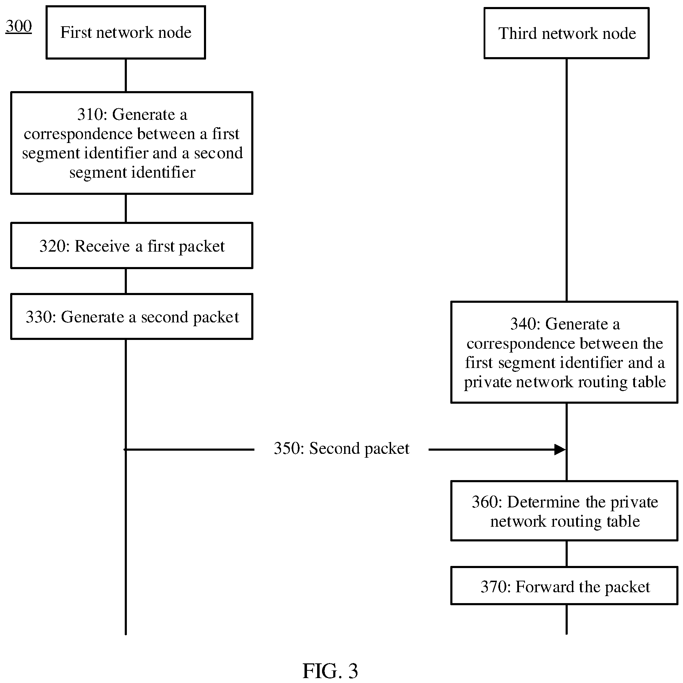

The following uses interaction between the first network node, the second network node, and the third network node as an example to describe the embodiments of this application in detail. FIG. 3 is a schematic flowchart of a method 300 for forwarding a packet in a network according to an embodiment of this application from a perspective of device interaction. As shown in the figure, the method 300 may include step 310 to step 370. The following describes the steps in the method 300 in detail.

Step 310: A first network node generates a correspondence between a first SID and a second SID. The first SID is an identifier that corresponds to a private network and that is stored in a second network node, and the second SID is an SID of a third network node.

Optionally, the correspondence between the first SID and the second SID may be a correspondence between a locator field of the first SID and the second SID.

Optionally, the first network node may receive an advertisement packet sent by the second network node, where the advertisement packet includes the correspondence between the first SID and the second SID.

Optionally, the first network node may alternatively receive the correspondence that is between the first SID and the second SID and that is configured by a network management device.

Optionally, the first network node may alternatively receive the correspondence that is between the first SID and the second SID and that is sent by the third network node.

For example, the first SID may be 200:: 100. For example, the second SID may be 300::200.

Step 320: The first network node receives a first packet. A destination address of the first packet is the first SID.

Optionally, the first packet may be sent by another PE device. For example, as shown in FIG. 1, the first network node may be the P 130, and the first packet may be sent by the PE 120.

Optionally, after receiving the first SID, the first network node generates a fast reroute (fast reroute, FRR) backup protection entry of the second SID. Table 1 shows a part of a local forwarding information base (forwarding information base, FIB) table of the first network node. The third row in Table 1 is a backup route of the first network node.

**Table 1**

| Destination address | Outbound interface | Next hop | Action (action) |
|---|---|---|---|
| First SID | Ethernet interface 3/0/0 | Second network node | |
| Second SID | Ethernet interface 3/0/1 | Third network node | Push (push) 300::200 |

Step 330: The first network node generates a second packet. When it is determined that the second network node is unreachable, the second SID is pushed to the first packet to generate the second packet.

Optionally, that the second network node is unreachable may be understood as that the second network node is faulty, or that the second network node is unreachable may be understood as that a link between the second network node and a customer node directly connected to the second network node is faulty. This is not limited in this application.

Optionally, after receiving the first packet, the first network node needs to search the local FIB table of the first network node, namely, Table 1. When the second network node is unreachable, the first network node finds a backup route of the second network node, where a DA of the backup route is the third network node. In other words, the first network node needs to send the first packet to a destination device by using the backup route of the second network node.

Optionally, before sending the first packet to the third network node, the first network node needs to generate the second packet. Specifically, the first network node needs to push an SRH to the first packet, and a segment list (segment list, SL) in the SRH may include the second SID and an address of the third network node. In this case, the first network node generates the second packet to be sent to the third network node. For example, a first layer in the SL in the SRH may be a DA, namely, an address of the second network node. For example, the address of the second network node may be 200:: 100/128. A second layer may be the second SID. For example, the second SID may be 300: :200. At the same time, the first network node modifies a DA in an IPv6 packet header to the second SID, and forwards the packet according to the longest match rule of IP routing.

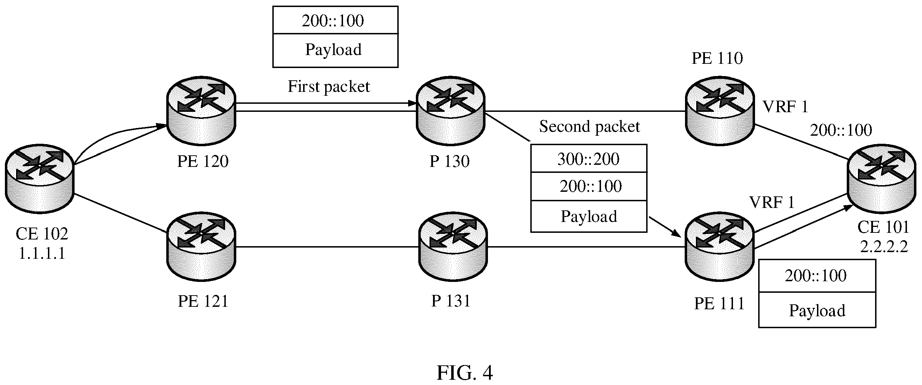

For example, as shown in FIG. 4, the first packet includes the first SID, the first SID may be 200:: 100, 200::100 is the identifier that corresponds to the private network and that is stored in the second network node, and the DA of the first packet is the second network node, namely, a PE 110 in FIG. 4. When the PE 110 is unreachable, the first network device needs to search for the backup route of the first network node, namely, Table 1. It can be learned from Table 1 that a next hop of the backup route of the first network node is the third network node, namely, a PE 111 in FIG. 4. In this case, the first network node encapsulates a layer of SRH into a header of the first packet, and modifies a DA of an outer IPv6 header to the address of the third network node. In other words, the first network node pushes the second SID to the first packet to generate the second packet.

Step 340: The third network node generates a correspondence between the first SID and a private network routing table. The first SID is the identifier that corresponds to the private network and that is stored in the second network node, and the routing table is a private network routing table destined to the private network.

Optionally, before generating the correspondence between the first SID and the private network routing table, the third network node needs to receive the first SID sent by the second network node.

Optionally, before generating the correspondence between the first SID and the private network routing table, the third network node receives a route that is from the second network node to the private network and that is sent by the second network node.

Optionally, the third network node needs to add the route from the second network node to the private network to the private network routing table. In addition, the third network node further needs to record a mapping relationship between the first SID and the private network routing table in a local remote segment identifier (remote SID) table of the third network node, for example, a mapping relationship shown in Table 2.

**Table 2**

| Remote segment identifier (remote SID) | Function (function) |
|---|---|
| First SID | Popup (Pop), and search a bound VPN instance routing table (VRF). The pop means decapsulate an SRH or strip a SID. |

Optionally, the third network node further needs to deliver the second SID to a local segment identifier table of the third network node, and set a function corresponding to the second SID as searching the remote segment identifier table. Table 3 shows the local segment identifier table.

**Table 3**

| Local segment identifier (local SID) | Function (function) |
|---|---|
| Second SID | Popup (Pop), and search a local remote segment identifier table. The pop means decapsulate an SRH or strip a SID. |

It may be understood that the second network node needs to send the route from the second network node to the private network to the third network node, and the third network node may add the route from the second network node to the private network to the private network routing table of the third network node as a backup route.

Step 350: The third network node receives the packet sent by the first network node, namely, the second packet. An SRH of the second packet includes the first SID and the second SID.

For example, in the second packet shown in FIG. 4, the second packet includes the first SID and the second SID, the first SID is 200::100, and the second SID is 300::200.

Step 360: The third network node determines the private network routing table. The private network routing table is a routing table that needs to be used by the third network node to forward the packet, namely, the private network routing table that originally needs to be used by the second network node to forward the packet.

Optionally, the third network node determines the private network routing table based on the first SID and the second SID. Specifically, the third network node searches, based on a DA of the second packet, namely, the second SID, for the function corresponding to the second SID in the local remote segment identifier table of the third network node, that is, searches the remote segment identifier table.

Optionally, the third network node determines, based on a function field of the second SID, that the first SID needs to be used to determine the routing table used to forward the packet. The third network node determines, based on the correspondence between the first SID and the private network routing table, the routing table used to forward the packet, and the routing table is the private network routing table.

For example, the third network node may determine, based on the local segment identifier table (for example, Table 3) and the second SID, the function field corresponding to the second SID. The function field corresponding to the second SID indicates that the third network node needs to search the local remote segment identifier table (for example, Table 2) of the third network node, then searches the corresponding routing table based on the first SID, and finds, based on the correspondence between the first SID and the private network routing table, the routing table used to forward the packet.

### Step 370: Forward the packet.

Optionally, the third network node forwards the packet by using the private network routing table.

Optionally, the third network node needs to delete the SRH of the packet, searches the private network routing table by using a destination address in a packet header of the packet whose SRH is deleted, namely, the first packet, and forwards the packet whose SRH is deleted based on a matched routing entry.

For example, as shown in FIG. 4, when the third network node, namely, the PE 111, needs to forward the packet, the PE 111 needs to delete the SRH of the second packet, in other words, the PE 111 needs to delete 300::200, and search the private network routing table based on an address of an original IP packet of the first packet, and send the packet to a next node CE 101.

For example, as shown in FIG. 4, a route generation process on the network is as follows: The CE 101 advertises an IPv4 route 2.2.2.2 of a site to the PE 110, and deploys a VRF 1 at the PE 110. VPN routing information learned by the PE 110 from the CE 101 is stored in a VPN instance routing table generated by the PE 110 for the VRF 1. The PE 110 is configured with a locator field and a function field of an SID of the PE 110, and the segment identifier of the PE 110 may also be understood as a label or an index corresponding to the private network. In addition, the PE 110 advertises the SID including the locator field to all nodes on the network, associates the SID with the VRF 1, and delivers the SID to a local segment identifier table of the PE 110. The PE 110 establishes a BGP peer relationship with a PE 120, converts a private network route in a local private network routing table of the PE 110, and sends the converted private network route to the PE 120. After receiving the private network route, the PE 120 leaks the private network route to a local routing table of the PE 120. The local routing table of the PE 120 is a local routing table deployed on the PE 120 when the PE 120 is connected to a CE 102. The PE 120 converts the private network route into an ordinary IPv4 route, and advertises the ordinary IPv4 route to the CE 102. The device CE 102 learns of the route 2.2.2.2 from the private network device CE 101. In addition, the PE 110 further needs to establish a BGP peer relationship with the PE 111, and send a private network route and an advertisement packet in the VPN instance routing table generated by the PE 110 to the PE 111. The advertisement packet may further carry the SID of the PE 110. When receiving the private network route, the PE 111 may leak the private network route to a local private network routing table of the PE 111, and record a correspondence between the SID of the PE 110 and the private network route, namely, an entry in the remote segment identifier table. The remote segment identifier table may include a route from the PE 111 to the CE 101, and may further include a route from the PE 110 to the PE 111 to the CE 101. The PE 111 configures a correspondence between the SID of PE 110 and an SID of the PE 111, and advertises the correspondence to all nodes on the network. After receiving the correspondence between the SID of the PE 110 and the SID of the PE 111, a P 130 locally generates a backup routing entry of the PE 110, where a next-hop device of the backup route is the PE 111, and pushes the SID of the PE 111 to the received packet. In addition, the PE 111 further needs to deliver the SID of the PE 111 to a local segment identifier table of the PE 111, and set, in the local segment identifier table, a function corresponding to the SID of the PE 111 as searching the remote segment identifier table, to complete route advertisement in the entire network.

For example, as shown in FIG. 4, when the second network node is unreachable, a transmission path of a to-be-transmitted packet is CE 102→PE 120→P 130→PE 111→CE 101. An address of the CE 101 may be 2.2.2.2, and an address of the CE 102 may be 1.1.1.1. A transmission process of the to-be-transmitted packet is as follows: When the CE 102 accesses the CE 101, the CE 102 needs to write a DA of the to-be-sent packet as the address of the CE 101. In other words, the DA is 2.2.2.2. The PE 120 receives the private network packet through an interface bound to a VRF, searches a VRF corresponding to the PE 120, and searches for the DA and next-hop information that are associated with the packet, that is, a next device corresponding to the DA 2.2.2.2 associated with the packet is the P 130. In this case, the DA of the to-be-transmitted packet is 2.2.2.2. The PE 120 needs to push an SRH to the packet. A segment list in the SRH may include the SID that corresponds to the private network and that is of the PE 110 and the DA of the packet. As shown in FIG. 4, the SID that corresponds to the private network and that is of the PE 110 may be 200:: 100. The PE 120 further pushes an IPv6 packet header, and a DA of the IPv6 packet header may be the SID corresponding to the private network. The P 130 forwards the packet according to the longest match rule of IP routing. However, because the PE 110 is faulty, the P 130 needs to search a local FIB table of the P 130 according to the longest match rule of IP routing, and finds the backup route of the PE 110. The next-hop device to which the packet is forwarded and that is indicated by the backup route is the PE 111, and an action indicated by the backup route is that a layer of SRH needs to be encapsulated into a header of the packet. An SL in the SRH may include the SID of the PE 111 and the DA of the packet. As shown in FIG. 4, the SID of the PE 111 may be 300: :200. The P 120 further needs to modify the DA of the IPv6 packet header of the packet, where the DA of the IPv6 packet header may be the SID of the PE 111, and then forwards the packet to the next-hop device PE 111. After receiving the packet, the PE 111 needs to search the local segment identifier table of the PE 111 based on the SID of the packet, determine, based on the local segment identifier table and the SID of the PE 111, that the function corresponding to the SID of the PE 111 is to search the remote segment identifier table, search, based on the remote segment identifier table and the SID that is of the PE 110 and that is obtained by the PE 111, a routing table corresponding to the SID of the PE 110, and finds a private network routing table used to forward the packet in the routing table. The PE 111 deletes the outer IPv6 header and the SID of the PE 111 to expose the original IPv4 packet, searches the private network routing table based on the DA 2.2.2.2 of the IPv4 packet, and finds that a next device is the CE 101 based on the private network routing table. The PE 111 forwards the packet whose outer IPv6 packet header and the SID of the PE 111 are deleted to the CE 101, to complete communication between the private network device CE 102 and the private network device CE 101.

For example, as shown in FIG. 4, when the second network node is reachable, a transmission path of a to-be-transmitted packet is CE 102→PE 120→P 130→PE 111→CE 101. An address of the CE 101 may be 2.2.2.2, and an address of the CE 102 may be 1.1.1.1. A transmission process of the to-be-transmitted packet is as follows: When the CE 102 accesses the CE 101, the CE 102 needs to write a DA of the to-be-sent packet as the address of the CE 101. In other words, the DA is 2.2.2.2. The PE 120 receives the private network packet through an interface bound to a VRF, searches the VRF corresponding to the PE 120, and searches for the DA and next-hop information that are associated with the packet, that is, a next device corresponding to the DA 2.2.2.2 associated with the packet is the P 130. In this case, the DA of the to-be-transmitted packet is 2.2.2.2. The PE 120 needs to push an SRH to the packet. An SL in the SRH may include the SID that corresponds to the private network and that is of the PE 110 and the DA of the packet. As shown in FIG. 4, the SID that corresponds to the private network and that is of the PE 110 may be 200::100. The PE 120 further pushes an IPv6 packet header, and a DA of the IPv6 packet header may be the SID corresponding to the private network. The P 130 forwards the packet according to the longest match rule of IP routing. The packet is forwarded to the next-hop device P 130. The P 130 forwards the packet to the next-hop device PE 110 according to the longest match rule. The PE 110 uses the SRv6 VPN SID to search the local SID table to match a forwarding action corresponding to the SID of the private network of the PE 110, removes the IPv6 packet header, matches the VRF based on the SID of the private network of the PE 110, then searches the VPN instance routing table, searches for an outbound interface or a next-hop device for the IPv4 route 2.2.2.2, and forwards the packet to the private network device CE 101 based on a search result, to complete communication between the private network device CE 102 and the private network device CE 101.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

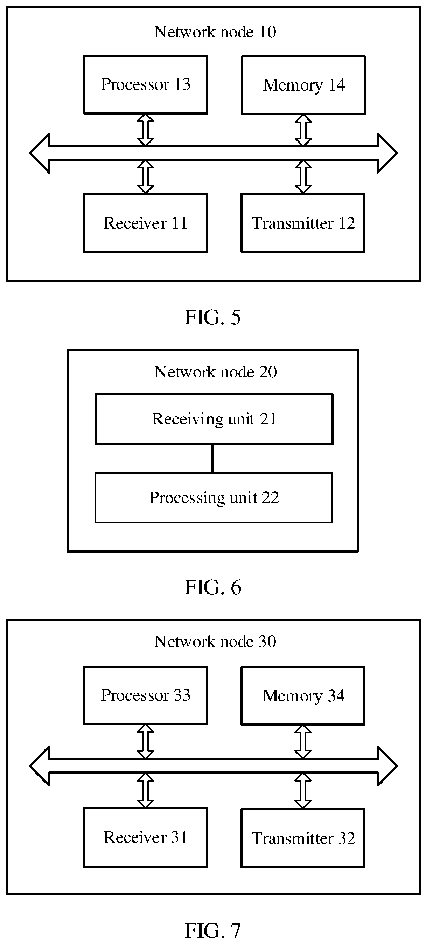

The foregoing describes in detail the method for forwarding the packet in the network in the embodiments of this application with reference to FIG. 3 and FIG. 4. The following describes in detail apparatuses in the embodiments of this application with reference to FIG. 5 to FIG. 9.

An embodiment of this application provides a network node. The following describes a structure and functions of the network node with reference to FIG. 5. FIG. 5 is a schematic block diagram of a network node 10 according to an embodiment of this application. As shown in FIG. 5, the network node 10 includes a receiver 11, a transmitter 12, and a processor 13. Optionally, the network node 10 further includes a memory 14. The receiver 11, the transmitter 12, the processor 13, and the memory 14 communicate with each other through an inner connection path, to transfer a control signal and/or a data signal. The memory 14 is configured to store a computer program. The processor 13 is configured to invoke the computer program from the memory 14 and run the computer program, to control the receiver 11 to receive a signal, and control the transmitter 12 to send a signal. When a program instruction stored in the memory 14 is executed by the processor 13, the processor 13 is configured to generate a correspondence between a first SID and a second SID, where the first SID is an identifier that corresponds to a private network and that is stored in a second network node, and the second SID is an SID of a third network node.

The receiver 11 is configured to receive a first packet, where a DA of the first packet is the first SID.

When it is determined that the second network node is unreachable, the processor 13 is further configured to push the second SID to the first packet to generate a second packet.

The transmitter 12 is configured to send the second packet to the third network node.

The processor 13 and the memory 14 may be combined into a processing apparatus. The processor 13 is configured to execute program code stored in the memory 14, to implement the foregoing functions. In a specific implementation, the memory 14 may be integrated into the processor 13, or independent of the processor 13.

It should be understood that the network node 10 may correspond to the first network node in the method 300 for forwarding the packet in the network according to the embodiments of the present invention, and the network node 10 may include units configured to perform the method performed by the first network node in the method 300 for forwarding the packet in the network in FIG. 3. In addition, the units in the network node 10 and the foregoing other operations and/or functions are respectively intended to implement corresponding procedures of the method 300 for forwarding the packet in the network in FIG. 3. For a specific process in which the units perform the foregoing corresponding steps, refer to the foregoing descriptions of the method embodiment in FIG. 3. For brevity, details are not described herein again.

An embodiment of this application further provides a network node. The following describes a structure and functions of the network node with reference to FIG. 6. FIG. 6 is another schematic block diagram of a network node 20 according to an embodiment of this application. As shown in FIG. 6, the network node 20 includes a receiving unit 21 and a processing unit 22.

The receiving unit 21 may be implemented by software or hardware. When being implemented by the hardware, the receiving unit 21 may be the receiver 11 in FIG. 5, and the processing unit 22 may be the processor 13 in FIG. 5.

An embodiment of this application further provides a network node. The following describes a structure and functions of the network node with reference to FIG. 7. FIG. 7 is a schematic block diagram of a network node 30 according to an embodiment of this application. As shown in FIG. 7, the network node 30 includes a receiver 31 and a processor 33. Optionally, the network node 30 further includes a memory 34. The receiver 31, a transmitter 32, the processor 33, and the memory 34 communicate with each other through an inner connection path, to transfer a control signal and/or a data signal. The memory 34 is configured to store a computer program. The processor 33 is configured to invoke the computer program from the memory 34 and run the computer program, to control the receiver 31 to receive a signal, and control the transmitter 32 to send a signal. When a program instruction stored in the memory 34 is executed by the processor 33, the processor 33 is configured to generate a correspondence between a first SID and a private network routing table, where the first SID is an identifier that corresponds to a private network and that is stored in a second network node, and the routing table is a private network routing table destined to the private network.

The receiver 31 is configured to receive a packet sent by a first network node, where an SRH of the packet includes the first SID and a second SID.

The processor 33 is further configured to determine the private network routing table based on the first SID and the second SID.

The transmitter 32 is configured to forward the packet by using the private network routing table.

The processor 33 and the memory 34 may be combined into a processing apparatus. The processor 33 is configured to execute program code stored in the memory 34, to implement the foregoing functions. In a specific implementation, the memory 34 may be integrated into the processor 33, or independent of the processor 33.

It should be understood that the network node 30 may correspond to the third network node in the method 300 for forwarding the packet in the network according to the embodiments of the present invention, and the network node 30 may include units configured to perform the method performed by the third network node in the method 300 for forwarding the packet in the network in FIG. 3. In addition, the units in the network node 30 and the foregoing other operations and/or functions are respectively intended to implement corresponding procedures of the method 300 for forwarding the packet in the network in FIG. 3. For a specific process in which the units perform the foregoing corresponding steps, refer to the foregoing descriptions of the method embodiment in FIG. 3. For brevity, details are not described herein again.

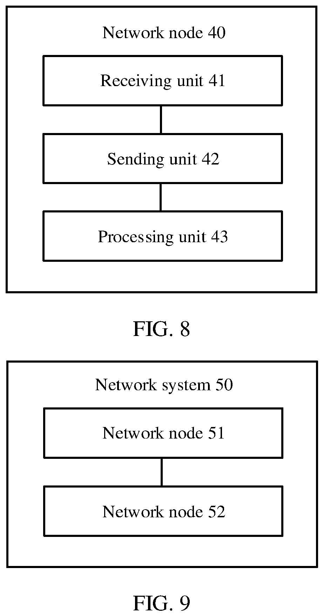

An embodiment of this application further provides a network node. The following describes a structure and functions of the network node with reference to FIG. 8. FIG. 8 is another schematic block diagram of a network node 40 according to an embodiment of this application. As shown in FIG. 8, the network node 40 includes a receiving unit 41, a sending unit 42, and a processing unit 43.

The receiving unit 41 and the sending unit 42 each may be implemented by software or hardware. When being implemented by the hardware, the receiving unit 41 may be the receiver 31 in FIG. 7, the sending unit 42 may be the transmitter 32 in FIG. 7, and the processing unit 43 may be the processor 33 in FIG. 7.

It should be understood that, the processor in the embodiments of this application may be a central processing unit (central processing unit, CPU), or may further be another general-purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

An embodiment of this application further provides a network system. FIG. 9 is a schematic block diagram of a network system 50 according to an embodiment of this application. As shown in FIG. 9, the network system 50 includes a network node 51 and a network node 52. The network node 51 may be the network node 10 shown in FIG. 5, and the network node may be the network node 30 shown in FIG.7. Alternatively, the network node 51 may be the network node 20 shown in FIG. 6, and the network node 52 may be the network node 40 shown in FIG. 8.

All or some of the foregoing embodiments may be implemented by using software, hardware, firmware, or any combination thereof. When software is used to implement the embodiments, the foregoing embodiments may be implemented or partially in a form of a computer program product. The computer program product includes one or more computer instructions. When the computer program instructions are loaded or executed on a computer, the procedures or functions according to the embodiments of the present invention are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a computer software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for forwarding a packet in a network, wherein the network comprises a first network node, a second network node, and a third network node, the first network node is connected to both the second network node and the third network node, both the second network node and the third network node are connected to a same private network, the method is applied to the first network node, and the method comprising:
generating a correspondence between a first segment identifier SID and a second SID, wherein the first SID is an identifier that corresponds to the private network and that is stored in the second network node, and the second SID is an SID of the third network node;
receiving a first packet, wherein a destination address DA of the first packet is the first SID; and
when it is determined that the second network node is unreachable, pushing the second SID to the first packet to generate a second packet, and sending the second packet to the third network node.

2. The method according to claim 1, wherein the generating a correspondence between a first SID and a second SID comprising:
generating a correspondence between a locator field of the first SID and the second SID.

3. The method according to claim 1 or 2, wherein the method comprising:
receiving an advertisement packet sent by the second network node, wherein the advertisement packet comprises the correspondence between the first SID and the second SID; or
receiving the correspondence that is between the first SID and the second SID and that is configured by a network management device; or
receiving the correspondence that is between the first SID and the second SID and that is sent by the third network node.

4. The method according to any one of claims 1 to 3, wherein the pushing the second SID to the first packet to generate a second packet comprising:
pushing a segment routing header SRH to the first packet, wherein the SRH comprises the second SID.

5. A method for forwarding a packet in a network, wherein the network comprises a first network node, a second network node, and a third network node, the first network node is connected to both the second network node and the third network node, both the second network node and the third network node are connected to a same private network, the third network node stores a routing table destined to the private network, the method is applied to the third network node, and the method comprising:
generating a correspondence between a first segment identifier SID and a private network routing table, wherein the first SID is an identifier that corresponds to the private network and that is stored in the second network node, and the routing table is a private network routing table destined to the private network;
receiving a packet sent by the first network node, wherein an SRH of the packet comprises the first SID and a second SID;
determining the private network routing table based on the first SID and the second SID; and
forwarding the packet by using the private network routing table.

6. The method according to claim 5, wherein the determining the private routing table based on the first SID and the second SID comprising:
determining, based on a function field of the second SID, that the first SID needs to be used to determine a routing table used to forward the packet; and
determining, based on the first SID and the correspondence, that the routing table used to forward the packet is the private network routing table.

7. The method according to claim 5 or 6, wherein the forwarding the packet by using the private network routing table comprising:
deleting the SRH of the packet, searching the private network routing table by using a destination address DA of the packet whose SRH is deleted, and forwarding the packet whose SRH is deleted based on a matched routing entry.

8. The method according to any one of claims 5 to 7, wherein before the generating a correspondence between a first SID and a private network routing table, the method further comprises:
receiving the first SID sent by the second network node.

9. The method according to any one of claims 5 to 8, wherein before the generating a correspondence between a first SID and a private network routing table, the method further comprises:
receiving a route that is from the second network node to the private network and that is sent by the second network node; and
adding the route from the second network node to the private network to the private network routing table.

10. The method according to any one of claims 5 to 9, wherein the method further comprises:
sending a correspondence between the first SID and the second SID to the first network node.

11. A network node, wherein a network comprises a first network node, a second network node, and a third network node, the first network node is connected to both the second network node and the third network node, both the second network node and the third network node are connected to a same private network, the network node is the first network node, and the network node comprising:
a processing unit, configured to generate a correspondence between a first segment identifier SID and a second SID, wherein the first SID is an identifier that corresponds to the private network and that is stored in the second network node, and the second SID is an SID of the third network node; and
a receiving unit, configured to receive a first packet, wherein a destination address DA of the first packet is the first SID, wherein
when it is determined that the second network node is unreachable, the processing unit is further configured to push the second SID to the first packet to generate a second packet, and send the second packet to the third network node.

12. The network node according to claim 11, wherein the processing unit is specifically configured to generate a correspondence between a locator field of the first SID and the second SID.

13. The network node according to claim 11 or 12, wherein the processing unit is further specifically configured to receive an advertisement packet sent by the second network node, wherein the advertisement packet comprises the correspondence between the first SID and the second SID; or
receive the correspondence that is between the first SID and the second SID and that is configured by a network management device; or
receive the correspondence that is between the first SID and the second SID and that is sent by the third network node.

14. The network node according to any one of claims 11 to 13, wherein the processing unit is further specifically configured to push a segment routing header SRH to the first packet, wherein the SRH comprises the second SID.

15. A network node, wherein the network comprises a first network node, a second network node, and a third network node, the first network node is connected to both the second network node and the third network node, both the second network node and the third network node are connected to a same private network, the third network node stores a routing table destined to the private network, the network node is the third network node, and the network node comprising:
a processing unit, configured to generate a correspondence between a first segment identifier SID and a private network routing table, wherein the first SID is an identifier that corresponds to the private network and that is stored in the second network node, and the routing table is a private network routing table destined to the private network;
a processing unit, configured to generate a packet sent by the first network node, wherein an SRH of the packet comprises the first SID and a second SID, wherein
the processing unit is further configured to determine the private network routing table based on the first SID and the second SID; and
a sending unit, configured to forward the packet by using the private network routing table.

16. The network node according to claim 15, wherein the processing unit is specifically configured to determine, based on a function field of the second SID, that the first SID needs to be used to determine a routing table used to forward the packet; and
the processing unit is further specifically configured to determine, based on the first SID and the correspondence, that the routing table used to forward the packet is the private network routing table.

17. The network node according to claim 15 or 16, wherein the processing unit is further specifically configured to: delete the SRH of the packet, search the private network routing table by using a destination address DA of the packet whose SRH is deleted, and forward the packet whose SRH is deleted based on a matched routing entry.

18. The network node according to any one of claims 15 to 17, wherein the receiving unit is specifically configured to receive the first SID sent by the second network node.

19. The network node according to any one of claims 15 to 18, wherein the receiving unit is further specifically configured to receive a route that is from the second network node to the private network and that is sent by the second network node; and
the processing unit is further specifically configured to add the route from the second network node to the private network to the private network routing table.

20. The network node according to any one of claims 15 to 19, wherein the sending unit is further specifically configured to send a correspondence between the first SID and the second SID to the first network node.

21. A network system, comprising
the network node according to any one of claims 11 to 14; and
the network node according to any one of claims 15 to 20.

22. A computer program product, wherein the computer program product comprises computer program code, and when the computer program code is run on a network node, the network node is enabled to perform the method according to any one of claims 1 to 4 or any one of claims 5 to 10.

23. A computer-readable storage medium, wherein the computer-readable medium stores program code, and the program code perform the method according to any one of claims 1 to 4 or any one of claims 5 to 10.
